# EUROPÄISCHE PATENTSCHRIFT

(11) **EP 3 278 645 B1**
(45) Veröffentlichungstag und Bekanntmachung des Hinweises auf die Patenterteilung: **20.10.2021**
(21) Anmeldenummer: 17184246.1
(22) Anmeldetag: 01.08.2017
(51) Int. Cl.: A01G 22/00, A01B 79/02, A01C 21/00

(54) **VERFAHREN ZUR OPTIMIERUNG EINES ARBEITSPARAMETERS EINER MASCHINE ZUR AUSBRINGUNG VON LANDWIRTSCHAFTLICHEM MATERIAL AUF EIN FELD UND ENTSPRECHENDE MASCHINE**
METHOD FOR OPTIMIZING AN OPERATING PARAMETER OF A MACHINE FOR THE APPLICATION OF AGRICULTURAL MATERIAL TO A FIELD AND CORRESPONDING MACHINE
PROCÉDÉ D'OPTIMISATION D'UN PARAMÈTRE DE TRAVAIL D'UNE MACHINE D'EXTRACTION DE MATÉRIEL AGRICOLE SUR UN CHAMP ET MACHINE CORRESPONDANTE

(30) Priorität: 05.08.2016 DE 102016214554
(43) Veröffentlichungstag der Anmeldung: 07.02.2018
(73) Patentinhaber: Deere & Company, Moline, IL 61265 (US)
(72) Erfinder: Gresch, Valentin, 68163 Mannheim (DE); Kremmer, Martin, 68163 Mannheim (DE)
(74) Vertreter: Holst, Sönke

(56) Entgegenhaltungen:
- EP-A1- 2 636 292
- WO-A2-2014/026183
- DE-A1-102006 014 703
- US-A1- 2015 066 932

## Beschreibung

Die Erfindung betrifft ein Verfahren zur Optimierung eines Arbeitsparameters einer Maschine zur Ausbringung von landwirtschaftlichem Material auf ein Feld und eine entsprechende Maschine.

### Stand der Technik

Ein Bestreben der Präzisions-Landwirtschaft ist, mit gegebenen Mitteln ein möglichst gutes Ergebnis beim Anbau von Pflanzen zu erzielen. Man versucht daher, beim Säen, Düngen, Spritzen etc. die Arbeitsparameter, wie Sätiefe, Abstände, Saatgutart, Art des Düngemittels, Ausbringmengen etc. zu optimieren, basierend auf zuvor gewonnenen Daten, die vor dem Arbeitsvorgang oder während des Arbeitsvorgangs durch Sensoren oder andere Verfahren ermittelt werden und beispielsweise die Bodenart, Bodenfeuchte, Geländetopographie, Pflanzenart und den Pflanzenzustand betreffen.

Falls vor dem Arbeitsvorgang bereits hinreichend genaue Daten in ausreichend kleiner Rasterung bekannt sind, wird im Stand der Technik zunächst eine elektronische Karte erstellt, in der ortsspezifische, optimierte Werte für die Arbeitsparameter eingetragen werden. Diese Karte wird an einen Bordcomputer einer Arbeitsmaschine übertragen, die einen Aktor positionsspezifisch anhand der durch die Karte vorgegebenen Werte selbsttätig einstellt. Als Beispiel sei auf die als gattungsbildend angesehene DE 195 32 870 A1 verwiesen, in welcher vorgeschlagen wird, zunächst anhand der Nährstoffversorgung, Bodenfestigkeit und Bodenarten eines Feldes eine Karte mit optimalen Ablagetiefen für das Saatgut zu berechnen und beim Säen die Sätiefe anhand der vorberechneten Ablagetiefe einzustellen. Wenn sich in Vorwärtsrichtung Einstellwerte ändern, erfolgt ein stufiger oder stufenloser (glättender) Übergang. Auch in Querrichtung können unterschiedliche Einstellwerte für Teilarbeitsbreiten vorgesehen sein.

Eine ähnliche Vorgehensweise beschreibt die DE 198 44 395 A1, bei der vor einem Sävorgang anhand einer Karte der Bodenfeuchte und Bodenarten und einer Wetterprognose eine Karte mit einzustellenden Sätiefen berechnet und an die Sämaschine übertragen wird. Bei einer anderen Ausführungsform kann die Bodenfeuchte direkt beim Sävorgang gemessen und zur Vorgabe der Sätiefe genutzt werden.

In dem Fall, dass vor dem Arbeitsvorgang bereits eine Karte mit Daten des gesamten Feldes vorliegt, ist es möglich, die Einstellwerte im Voraus zu berechnen und (z.B. in Form der Glättung gemäß DE 195 32 870 A1) auch Daten einer bestimmten Position benachbarter Stellen des Feldes zu berücksichtigen, was in Form der Glättung gewisse Vorteile haben kann, da beispielsweise Messfehler oder Ausreißer bei der Ermittlung der Daten ausgemittelt werden und auch keine schwierig durchführbaren, sprunghaften Verstellungen von Einstellwerten auftreten.

Werden die Daten jedoch erst während des Arbeitsvorgangs ermittelt, stehen bei einer ersten Überfahrt über das Feld, abgesehen von an den bereits überfahrenen Stellen erfassten Daten, keinerlei Daten zur Verfügung. Daher würde man zur Festlegung der Einstellwerte nur die der jeweiligen Stelle zugehörigen oder maximal noch die unmittelbar zuvor ermittelten Daten verwenden. Bei einer zweiten Überfahrt, bei der Daten von einer zuvor durchgeführten, parallel verlaufenden Überfahrt vorliegen, besteht die Möglichkeit, die Daten der zuvor durchgeführten Überfahrt zu einer vorausschauenden Ansteuerung der Maschine zu verwenden, da man davon ausgehen kann, dass sich die Daten nur über relativ große Distanzen signifikant ändern. Im Stand der Technik nach DE 195 28 663 A1 wird dazu vorgeschlagen, eine Vorausberechnung von Ertragswerten anhand von Ertragsmesspunkten von bereits abgeernteten, benachbarten Reihen einzubeziehen, deren Position sich innerhalb eines bestimmten Radius vom Mähdrescher befinden. Es kann dabei der Ertragsmittelwert bestimmt oder ein Gradientenverfahren verwendet werden, d.h. die näheren Punkte werden mit einer höheren Gewichtung berücksichtigt. Die WO 2012/007549 A1 schlägt hierzu vor, ein Modell des Feldes bereitzustellen und eine Kostenfunktion des Unterschiedes zwischen einem Modellwert des Feldes und der ersten und zweiten Ableitungen der an benachbarten Stellen gewonnenen Messwerte zu optimieren. Es werden somit gemäß der beiden erwähnten Schriften die Daten benachbarter Punkte berücksichtigt, um vorausschauend für eine unmittelbar vor der Maschine liegende Position Einstellwerte zu bestimmen. Diese Vorgehensweise kann für Erntemaschinen zu deren selbsttätiger Einstellung oder bei anderen mobilen Arbeitsmaschinen genutzt werden, mit denen eine inhomogene Fläche teilflächenspezifisch bearbeitet werden soll, wie beispielsweise bei Pflügen oder Düngerstreuern.

Im Stand der Technik wurde vorgeschlagen, die Ausbringzeitpunkte und somit -orte einer Sämaschine selbsttätig derart zu regeln, dass ein gewünschter Abstand in Längs- und Querrichtung eingehalten wird (EP 2 636 292 A1). Die Pflanzen werden demnach in einem bestimmten Muster ausgesät. Es ist auch bekannt, eine Bodenbearbeitung anhand lokal erkannter Wildkräuter zu intensivieren, mit einer groben Einteilung des Felds in Flächen mit größeren oder kleinerem Unkrautbesatz zwecks Einstellung eines den Boden unterschneidenden Scharflügels, bei welcher möglicherweise eine Mittelung der lokalen Daten hinsichtlich des Unkrautbesatzes zur Einteilung des Felds in Flächen mit größeren oder kleinerem Unkrautbesatz erfolgt (DE 10 2006 014 703 A1) oder die Bodenandruckkraft einer Sämaschine zu kontrollieren und zu kartieren (WO 2914/026 183 A1 und US 2015/0066932 A1). In keiner der in diesem Absatz erwähnten Druckschriften wird anhand eines Pflanzenwachstumsmodells ein erwartetes Pflanzenwachstum der der jeweils bearbeiteten Stelle benachbarten Stelle berechnet und darauf basierend der Arbeitsparameter der jeweils mit Material beaufschlagten Stelle bestimmt.

### Aufgabe der Erfindung

Die Vorgehensweisen nach DE 195 28 663 A1 oder WO 2012/007549 A1 eignen sich, wie dort ausgeführt wird, nur für Anwendungsfälle, bei denen die an einer bestimmten Stelle durchgeführte Bearbeitung keinerlei Auswirkung auf die Bearbeitung neben dieser Stelle hat, denn es macht für eine bestimmte Stelle des Feldes grundsätzlich keinen Unterschied, ob die benachbarte Stelle mit anderen Parametern abgeerntet oder gepflügt wurde.

Anders sieht die Lage hingegen beim Säen aus, denn die Sätiefe und andere Säparameter, wie der Saatgutabstand, beeinflussen den Pflanzenaufgang in großem Maße. Wenn nun an einer bestimmten Stelle des Feldes die Pflanzen mit sehr günstigen Säparametern gesät wurden, gehen sie dort schneller auf als an benachbarten Stellen mit ungünstigeren Säparametern eingebrachte Pflanzen. Das hat über die Vegetationsperiode zur Folge, dass die mit ungünstigeren Säparametern eingebrachten Pflanzen wesentlich kleiner bleiben oder sogar eingehen, da die benachbarten, mit günstigeren Säparametern gesäten Pflanzen schneller wachsen und ihnen Licht, Wasser und Nährstoffe rauben. Ähnliche Probleme können auftreten, wenn bestimmte Stellen eines Feldes stärker als andere Stellen gedüngt werden und die dort wachsenden Pflanzen viel größer als an den benachbarten, weniger gedüngten Stellen wachsenden Pflanzen werden und letzteren Licht, Wasser und Nährstoffe nehmen.

Die Erfindung hat sich zur Aufgabe gesetzt, die genannten Nachteile zu vermeiden oder zumindest zu vermindern.

### Lösung

Diese Aufgabe wird erfindungsgemäß durch die Lehre der Patentansprüche 1 und 10 gelöst, wobei in den weiteren Patentansprüchen Merkmale aufgeführt sind, die die Lösung in vorteilhafter Weise weiterentwickeln.

Ein Verfahren zur Optimierung eines Arbeitsparameters einer Maschine zur Ausbringung von landwirtschaftlichem Material auf ein Feld umfasst den Schritt des Berechnens eines Arbeitsparameters für die Maschine bei der Ausbringung des Materials an einer Stelle des Feldes durch eine elektronische Rechnereinheit anhand von Daten hinsichtlich der das Pflanzenwachstum beeinflussenden Eigenschaft der mit dem Material zu beaufschlagenden Stelle und anhand von Daten hinsichtlich der das Pflanzenwachstum beeinflussenden Eigenschaft (bei der es sich um einen daraus abgeleiteten Arbeitsparameter der Maschine handeln kann) für eine der mit dem Material zu beaufschlagenden Stelle benachbarte Stelle des Feldes im Sinne einer Optimierung eines pflanzenbaulichen Ergebnisses, wobei die Rechnereinheit anhand der Daten der benachbarten Stelle und eines Pflanzenwachstumsmodells ein erwartetes Pflanzenwachstum an der benachbarten Stelle berechnet und den Arbeitsparameter für die mit dem Material zu beaufschlagende Stelle anhand des an der benachbarten Stelle erwarteten Pflanzenwachstums berechnet.

Mit anderen Worten wird für eine bestimmte Stelle eines Feldes ein Arbeitsparameter für eine Maschine zum Ausbringen von landwirtschaftlichem Material (wie Saatgut oder Dünger oder Chemikalien) durch eine Rechnereinheit berechnet. Der Rechnereinheit liegen Daten hinsichtlich wenigstens einer das Pflanzenwachstum beeinflussenden Eigenschaft der bestimmte Stelle des Feldes, für die ein Arbeitsparameter zu berechnen ist, und einer der bestimmten Stelle benachbarten Stelle und/oder ein daraus abgeleiteter Arbeitsparameter vor. Die Rechnereinheit weiß somit, welche das Pflanzenwachstum beeinflussende Eigenschaft an der benachbarten Stelle vorliegt und/oder welcher Arbeitsparameter der Maschine dort verwendet worden ist oder verwendet werden soll. Somit kann sie auch ein (erwartetes) Pflanzenwachstum an der benachbarten Stelle berechnen und den Arbeitsparameter für die bestimmte Stelle des Feldes derart optimieren, dass man ein optimales pflanzenbauliches Ergebnis erhält.

Wenn die Rechnereinheit beispielsweise anhand der dortigen, das Pflanzenwachstum beeinflussenden Eigenschaft und des dort vorgesehenen Arbeitsparameters berechnet, dass die Pflanzen an der benachbarten Stelle in 17 Tagen und 3 Stunden aufgehen werden, kann sie den Arbeitsparameter an der bestimmten Stelle so festlegen, dass die Pflanzen auch dort an genau demselben Zeitpunkt aufgehen, ggf. unter Berücksichtigung der unterschiedlichen Zeitpunkte, an dem das Saatgut in die Erde gebracht wird. Hierbei werden auch die das Pflanzenwachstum beeinflussenden Eigenschaften der betreffenden Stelle berücksichtigt, die von denen der benachbarten Stelle mehr oder weniger abweichen können. Analog kann anhand einer Düngergabe an der benachbarten Stelle berechnet werden, wie stark die dort vorhandenen Pflanzen voraussichtlich in einem bestimmten Zeitraum (z.B. bis zur nächsten Düngergabe) wachsen werden und an der betreffenden Stelle so viel Dünger gegeben werden, dass die dort wachsenden Pflanzen genauso groß werden wie die an der benachbarten Stellen. Weiterhin kann anhand von Informationen über die das Pflanzenwachstum beeinflussende Eigenschaft (bei der es sich z.B. um die Bodenbeschaffenheit und/oder die Bodenfeuchte und/oder die Bodentopografie und/oder den Nährstoffgehalt des Bodens handeln kann) zwischen mehreren Saatgutsorten umgeschaltet werden. So kann beispielsweise in einer Bodenzone mit Idealbedingungen eine sehr ertragsstarke Saatgutsorte ausgesät werden und in Bodenzonen mit schwierigen Bedingungen eine ertragsschwächere aber robustere Saatgutsorte ausgesät werden.

Die erwähnte Optimierung des pflanzenbaulichen Ergebnisses muss nicht unbedingt bedeuten, dass die Pflanzen möglichst groß werden sollen, sondern kann in einer ausgefeilteren Variante eine Kosten- und Gewinnoptimierung beinhalten, d.h. es wird berücksichtigt, welche Kosten für Saatgut, Kraftstoff, Dünger und/oder die Arbeitsstunden anfallen und welcher Preis für die Pflanzen oder die daraus erzeugten Produkte zu erzielen ist und anhand aller Gesichtspunkte wird ein betriebswirtschaftliches Optimum erzielt.

Die Rechnereinheit kann den Arbeitsparameter anhand eines Pflanzenwachstumsmodells berechnen, das relativ einfach sein kann und beispielsweise die Sätiefe nur anhand der Bodenfeuchte festlegt. Bei einem derartigen Modell wird die Bodenfeuchte der benachbarten Stelle mit berücksichtigt und bei Änderungen der Bodenfeuchte ein gradueller Übergang der Sätiefe erzeugt. Es kann jedoch auch ein beliebig komplexes Modell verwendet werden, das eine große Anzahl an Bodenparametern, die Topologie des Feldes, verschiedenste Pflanzenparameter und/oder Wetteraussichten berücksichtigt.

Wie bereits erwähnt, kann die Rechnereinheit den Arbeitsparameter im Sinne eines möglichst gleichmäßigen Aufgangs und/oder Wachstums der Pflanzen berechnen.

Bei einer möglichen Ausführungsform erfolgt die Berechnung des Arbeitsparameters im Vorab bei der Planung eines Ausbringvorgangs für ein gesamtes Feld anhand von für das Feld vorliegenden Daten hinsichtlich der das Pflanzenwachstum beeinflussenden Eigenschaften. Es liegt demnach eine Karte des Felds mit das Pflanzenwachstum beeinflussenden Eigenschaften vor, anhand von denen ein Ausbringplan erstellt wird.

Bei einer anderen Ausführungsform erfolgt die Berechnung des Arbeitsparameters während des Ausbringvorgangs auf einem Feld. Die Daten hinsichtlich der das Pflanzenwachstum beeinflussenden Eigenschaften werden hierbei mittels eines Sensors während des Ausbringvorgangs ermittelt und die Daten für die benachbarte Stelle sind bereits bei einer vorherigen Überfahrt des Feldes ermittelt worden. Bei dieser Ausführungsform kann vorgesehen sein, dass während einer ersten Überfahrt über das Feld entlang eines ersten Weges der Arbeitsparameter der Maschine (mangels bisher erfasster Daten benachbarter Stellen des Feldes) durch die Rechnereinheit nur anhand mittels des Sensors ermittelter, das Pflanzenwachstum beeinflussenden Eigenschaften ermittelt wird und die Rechnereinheit die auf der ersten Überfahrt ermittelten, das Pflanzenwachstum beeinflussenden Eigenschaften und/oder Arbeitsparameter bei einer zweiten Überfahrt an der ersten Überfahrt benachbarten Stellen des Feldes berücksichtigt.

Der von der Rechnereinheit ermittelte Arbeitsparameter kann selbsttätig durch einen Aktor an der Maschine eingestellt werden, ggf. nach einer Bedienerbestätigung, oder durch den Bediener eingestellt werden.

Die Maschine kann mehrere über ihre Breite verteilte, separat durch einen Aktor ansteuerbare Einrichtungen umfassen, die durch die Rechnereinrichtung getrennt voneinander und ggf. unterschiedlich angesteuert werden.

### Ausführungsbeispiel

In den Zeichnungen ist ein nachfolgend näher beschriebenes Ausführungsbeispiel der Erfindung dargestellt. Es zeigt:
- Fig. 1: eine Draufsicht auf einen Ackerschlepper mit einer daran angebrachten Sämaschine,
- Fig. 2: eine seitliche Ansicht einer Reiheneinheit der Sämaschine,
- Fig. 3: ein Schema einer Rechnereinheit zur Kontrolle der Reiheneinheiten,
- Fig. 4: ein Flussdiagramm für eine Vorgehensweise, nach dem die Rechnereinheit arbeiten kann, und
- Fig. 5: ein Beispiel für ein Feld mit einer darauf arbeitenden Sämaschine.

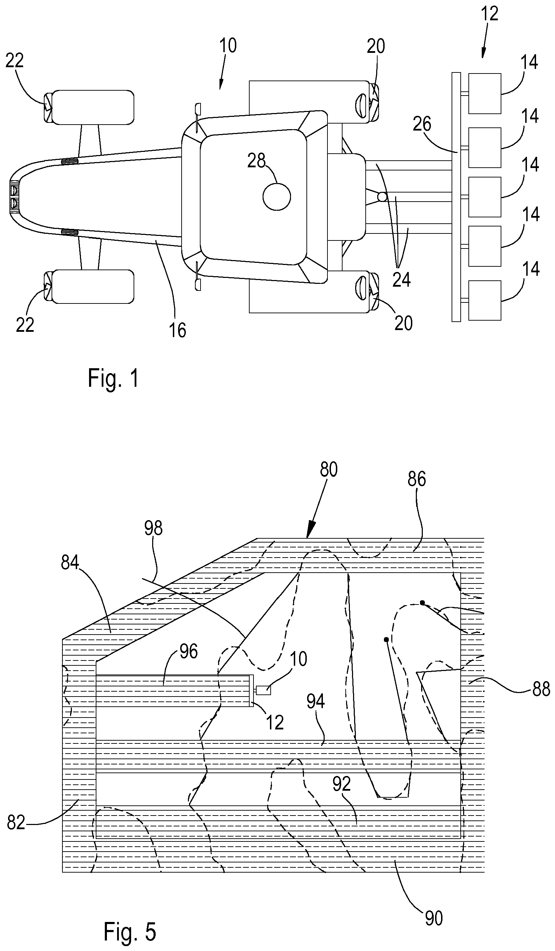

Die Figur 1 zeigt eine Draufsicht auf eine Kombination aus einem Ackerschlepper 10 und einer daran befestigten Sämaschine 12 mit einer Anzahl über die Breite des Geräts 12 verteilter Reiheneinheiten 14 zum Einbringen von Saatgut in den Boden, obwohl auch beliebige andere Typen von Sämaschinen 12 verwendet werden können. Die Reiheneinheiten 14 können auf einer Linie liegen, wie gezeigt, oder in Vorwärtsrichtung zueinander versetzt befestigt sein. Der Ackerschlepper 10 umfasst ein Fahrgestell 16 mit hinteren, antreibbaren Rädern 20 und vorderen, lenkbaren Rädern 22. An einer am Fahrgestell 16 befestigten Dreipunktanbauvorrichtung 24 mit Ober- und Unterlenkern ist ein sich horizontal und quer zur Vorwärtsrichtung des Ackerschleppers 10, die in der Figur 1 von rechts nach links verläuft, erstreckender Werkzeugträger 26 angebracht. Der Werkzeugträger 26 haltert die Reiheneinheiten 14 der Sämaschine 12. Die Sämaschine 12 könnte auch auf eine beliebige andere Art am Fahrzeug 12 befestigt sein, beispielsweise auf einem Fahrgestell ruhen und über eine Deichsel gezogen werden. Auch könnte die Sämaschine 12 als pneumatische Sämaschine ausgeführt sein. Eine auf dem Empfang von Satellitensignalen (GPS, Galileo und/oder Glonass und ggf. lokaler Korrektursignal) beruhende Positionsbestimmungseinrichtung 28 ist am Dach des Ackerschleppers 10 befestigt.

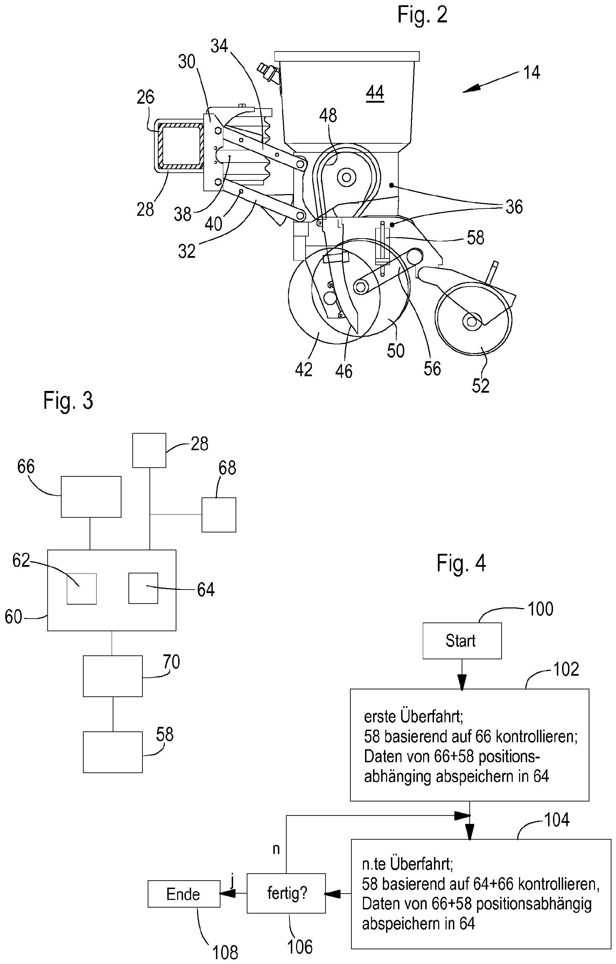

Die Figur 2 zeigt eine Reiheneinheit 14 der Sämaschine 12. Die Befestigung der Reiheneinheit 14 am Werkzeugträger 26 erfolgt über U-förmige Halterungen 28, die mit einer Konsole 30 verbunden sind, die sich vertikal an der Rückseite des Werkzeugträgers 26 erstreckt und an der übereinander zwei Lenker 32, 34 angelenkt sind, die außerdem jeweils an einem Gestell 36 der Reiheneinheit 14 angelenkt sind. Die Lenker 32, 34 bilden mit der Konsole 30 und dem Gestell 36 ein verstellbares Parallelogramm, das die Höhe des Gestells 36 über dem Boden definiert. Ein als Vorspannmittel dienender pneumatischer Aktor 38, der in der dargestellten Ausführungsform als pneumatischer Balgzylinder ausgeführt ist, greift einerseits oben an der Konsole 30 und andererseits unten am unteren Lenker 32 (am Punkt 40) an und definiert die Position des Gestells 36 und die Andruckkraft, mit der ein am Gestell 36 abgestützte6 Furchenöffner 42 mit dem Erdboden zusammenwirkt.

Das Gestell 36 trägt in an sich bekannter Weise einen Saatgutbehälter 44, ein Saatgutrohr 46 sowie eine (insbesondere pneumatische, mit von einem nicht gezeigten Gebläse bereitgestellten Unterdruck arbeitende) Zumesseinrichtung 48, die nach und nach einzelne Körner des Saatguts aus dem Saatgutbehälter 44 in das Saatgutrohr 46 abgibt, welches es in eine Furche ablegt, die durch den Furchenöffner 42 erzeugt wird, dessen Arbeitstiefe durch ein Tiefeneinstellrad 50 vorgegeben wird. Die Furche wird durch ein Schließrad 52 geschlossen. Die vertikale Position einer das Tiefeneinstellrad 50 halternden Schwinge 56 und somit die Tiefe der Furche, in welcher das Saatgut abgelegt wird, wird durch einen Aktor 58 definiert. Ein nicht gezeigter Rückkopplungssensor kann die aktuelle Sätiefe erfassen.

Die Figur 3 zeigt eine Rechnereinheit 60, die zur Kontrolle der Sämaschine 12 dient. Die Rechnereinheit 60 umfasst einen Prozessor 62 und einen Speicher 64, der einen festen und einen veränderbaren Teil aufweist. Die Rechnereinheit 60 ist mit einem Sensor 66, einer in der Kabine des Ackerschleppers 10 angeordneten Bedienerschnittstelle 68 mit Anzeige- und Eingabemitteln und der Positionsbestimmungseinrichtung 28 verbunden. Zudem ist die Rechnereinheit 60 mit einer Kontrolleinheit 70 verbunden, die alle Aktoren 58 getrennt voneinander kontrolliert, basierend auf Signale der erwähnten Rückkopplungssensoren. Der Sensor 66 kann eine beliebige, das Pflanzenwachstum beeinflussende Eigenschaft des Feldes erfassen, z.B. die Bodenfeuchtigkeit. Es kann ein einziger Sensor 66 am Ackerschlepper 10 oder an der Sämaschine 12 (insbesondere mittig) angebracht sein oder es sind mehrere Sensoren 66 über die Arbeitsbreite der Sämaschine 12 verteilt, z.B. jeweils einer Säeinheit 14 zugeordnet.

Die Figur 4 zeigt ein Flussdiagramm, nach dem die Rechnereinheit 60 beim Säen eines Feldes 80 vorgeht, wie es beispielhaft in der Figur 5 gezeigt ist. Nach dem Start im Schritt 100, bei dem die Rechnereinheit 60 initialisiert wird, erfolgt der Schritt 102, in dem eine erste Überfahrt über das Feld 80 durchgeführt wird. Diese Überfahrt kann, wie in der Figur 5 dargestellt, aus einer Umfahrung des Feldrandes anhand von Teilstrecken 82 bis 90 erfolgen. Während dieser ersten Überfahrt erfasst der Sensor 66 eine das Pflanzenwachstum beeinflussende Eigenschaft der überfahrenen Stellen des Felds, nämlich die Feuchtigkeit. Die Aktoren 58 werden anhand der (der Rechnereinheit 60 beispielsweise anhand einer Bedienereingabe über die Bedienerschnittstelle 68 bekannten) auszusäenden Fruchtart und der erfassten, das Pflanzenwachstum beeinflussenden Eigenschaft der überfahrenen Stellen angesteuert. Wenn nur ein einziger Sensor 66 vorhanden ist, werden alle Aktoren 58 mangels anderer Daten gleichartig angesteuert, während sie auch der lokalen Eigenschaft entsprechend unterschiedlich angesteuert werden könnten, wenn mehrere Sensoren 66 über die Arbeitsbreite der Sämaschine 12 verteilt sind. Die Signale des oder der Sensoren 66 und die mittels der Positionsbestimmungseinrichtung 28 erfasste, zugehörige Position sowie die Einstellwerte der Aktoren 58 (d.h. die Sätiefe) werden nach festgelegten Wegstrecken (z.B. alle 1 m) oder Zeitabläufen (z.B. alle 0,5 s) im Speicher 64 abgelegt. Es entsteht demnach im Speicher 64 nach und nach eine Karte des Feldes 80 mit den lokal erfassten, das Pflanzenwachstum beeinflussenden Eigenschaften und den Arbeitsparametern der Aktoren 58.

Es folgt dann der Schritt 104, in dem eine zweite, dritte oder nte (mit n>1) Überfahrt über das Feld 80 stattfindet, wie durch die Bezugszeichen 92 bis 96 angezeigt, bei der das Feld in parallelen Teilstrecken überfahren wird, die zu dem unten in der Figur 5 eingezeichneten Feldrand und der dort zurückgelegten Teilstrecke 90 parallel verlaufen und gegeneinander jeweils um zwei Arbeitsbreiten versetzt sind, um den Wendevorgang im durch die Teilstrecken 82, 88 definierten Vorgewende zu vereinfachen. Später werden dann die bisher noch nicht bearbeiteten Teilstrecken abgearbeitet. In diesem Schritt 104 kontrolliert die Rechnereinheit 60 die Aktoren 58 nicht nur anhand der dort mit dem Sensor 66 oder den Sensoren 66 lokal erfassten, das Pflanzenwachstum beeinflussenden Eigenschaft der betreffenden Stelle, sondern berücksichtigt auch eine oder mehrere, zuvor mittels des Sensors 66 oder der Sensoren 66 erfasste, das Pflanzenwachstum beeinflussenden Eigenschaften benachbarter Stellen des Feldes 80. Im Fall, dass eine derzeit befahrene Teilstrecke 92 genau neben einer zuvor befahrenen Teilstrecke 90 liegt, werden somit die auf der benachbarten Teilstrecke 90 verwendeten Arbeitsparameter der Aktoren 58 und/oder die diesen zu Grunde liegenden, mit dem Sensor 66 oder den Sensoren 66 lokal erfassten, das Pflanzenwachstum beeinflussenden Eigenschaft der benachbarten Stelle berücksichtigt, um anhand eines Pflanzenwachstumsmodells zu ermitteln, wann auf der benachbarten Stelle die Pflanzen aufgehen werden. Anhand dieses Zeitpunkts und der lokal mit dem Sensor(en) 66 erfassten, das Pflanzenwachstum beeinflussenden Eigenschaften der betreffenden Stelle der Teilstrecke 92 und optional, zur Verbesserung der Genauigkeit und Vermeidung von Ausreißern, einiger zurückliegender Messwerte der Teilstrecke 92 und der benachbarten Bereiche der Teilstrecke 90, die sich im Abstand von einem Radius von beispielsweise 10 oder 20 m befinden können, wird berechnet, wie tief das Saatgut an der betreffenden Stelle zu legen ist, um möglichst genau zu erreichen, dass die nun gesäten Pflanzen zum selben Zeitpunkt aufgehen. Die Aktoren 58 werden entsprechend angesteuert und die Signale des oder der Sensoren 66 und die mittels der Positionsbestimmungseinrichtung 28 erfasste, zugehörige Position sowie die Einstellwerte der Aktoren 58 (d.h. die Sätiefe) werden im Schritt 104 analog zum Schritt 102 nach festgelegten Wegstrecken (z.B. alle 1 m) oder Zeitabläufen (z.B. alle 0,5 s) im Speicher 64 abgelegt.

Falls im Schritt 104 keine direkt benachbarte, zuvor abgefahrene Teilstrecke vorliegen sollte, wie es bei den Teilstrecken 94 und 96 der Fall ist, kann entweder wie im Schritt 102 nur auf die lokalen Sensoren 66 zurückgegriffen werden, um den oder die Arbeitsparameter der Aktoren 58 festzulegen, oder man verwendet, analog zum Schritt 104 die Daten hinsichtlich der das Pflanzenwachstum beeinflussenden Eigenschaft und/oder hinsichtlich eines daraus abgeleiteten Arbeitsparameters der bereits untersuchten, am nächsten benachbarten Stellen des Feldes. Das wäre im Falle der Teilstrecke 94 zunächst die Teilstrecke 82, dann die Teilstrecke 92 und schließlich die Teilstrecke 88. Wenn bei den vorigen Teilstrecken mehr oder weniger sprunghafte Änderungen in der durch den Sensor 66 erfassten Eigenschaft festgestellt werden, kann dieser auch auf weitere Teilstrecken extrapoliert werden, wie anhand der Grenze 98 dargestellt, die eine Änderung in der Bodenfeuchte oder einer anderen Eigenschaft repräsentiert. Diese Grenze 98 kann auf den Teilstrecken 82, 90 und 92 jeweils in Bruchstücken erkannt werden und durch die Rechnereinrichtung 60 extrapoliert werden, sodass die Bruchstücke komplettiert werden, wie in der Figur 5 gezeigt. Die extrapolierte Grenze 98 kann auf den Teilstrecken 94 und 96 berücksichtigt werden.

Es folgt der Schritt 106, in dem abgefragt wird, ob das ganze Feld 80 abgearbeitet wurde. Ist das der Fall, folgt wieder der Schritt 104 und anderenfalls wird der Vorgang im Schritt 108 beendet.

Das im Speicher 64 abgelegte Pflanzenwachstumsmodell kann relativ einfach sein und lediglich beinhalten, wie tief das Saatgut als Funktion der Bodenfeuchte abgelegt werden soll und wann es aufgehen wird. Bereits mit diesem einfachen Modell kann eine Verbesserung des pflanzenbaulichen Ergebnisses über das ganze Feld 80 erzielt werden, denn auf der Teilstrecke 92 liegen der Rechnereinheit 60 bereits Daten vor, wie tief das Saatgut auf der benachbarten Teilstrecke 90 in den Boden eingebracht wurde. Das Pflanzenwachstumsmodell wird auf der Teilstrecke 92 die Sätiefe der der Teilstrecke 90 unmittelbar benachbarten Säeinheit 14 gleich der Sätiefe auf der Teilstrecke 90 (oder zumindest jener der Säeinheit 14, die unmittelbar neben der Teilstrecke 92 gearbeitet hat, wenn die Sätiefen über die Breite der Sämaschine 12 unterschiedlich sind) wählen, wenn die Eigenschaften auf den Teilstrecken 90, 92 jeweils gleich sind. Sind die Eigenschaften unterschiedlich, wird die Sätiefe jedoch nicht nur anhand der lokalen Eigenschaft, sondern auch anhand der benachbarten Sätiefe in der Weise ermittelt, dass alle Pflanzen möglichst gleichzeitig aufgehen. Bei unterschiedlichen Eigenschaften benachbarter Teilstrecken in Querrichtung und/oder sich in Fahrtrichtung ändernden Eigenschaften beim Befahren einer Teilstrecke wird somit ein gradueller Übergang der Sätiefe nicht nur in Vorwärtsrichtung der Sämaschine 12, sondern auch in Querrichtung erreicht.

Ein aufwändigeres Pflanzenwachstumsmodell kann eine oder mehrere der folgenden, das Pflanzenwachstum beeinflussende Eigenschaften berücksichtigen: Messwerte einer Sensorik zur Messung von Bodenparametern (z.B. Bodentemperatur, Bodenfeuchte, Bodentextur, Bodendichte, wobei der Sensor auf der Sämaschine 12 oder stationär sein (im Boden eingebracht) und mit der Sämaschine drahtlos kommuniziert, sowie georeferenzierte Parameter des Bodens, die in einer Karte eingetragen sind (z.B. Topografie, Bodenzonen, Bodentypen und/oder anderen agronomisch relevanten Daten wie Vorjahresertrag, Fruchtfolge, Düngung) und die mittels einer Kommunikationseinrichtung an die Rechnereinrichtung 60 übertragen werden können.

Der Aktor 58 muss nicht nur die Sätiefe kontrollieren, sondern kann alternativ oder zusätzlich auch eine der folgenden Größen steuern: einen Mechanismus und Aktor zur Umstellung von einem ersten Saatguttyp auf einen zweiten Saatguttyp, insbesondere basierend auf Schätzungen der Bodeneigenschaften, den Anpressdruck des Aktors 38, seine Anpressdruckreserve, und den Schardruck; die Zielpopulation (den Saatgutabstand), den Unterdruck für die Vereinzelung, die Einstellung des Vereinzelungsmechanismus, Schwellwerte für Variationskoeffizient, Doppelstellen, Fehlstellen und Fahrdynamik, die Fahrgeschwindigkeit, die Düngerrate gleichzeitig mit dem Säen ausgebrachten Düngers, die Ablagetiefe bzw. Ablageposition von Dünger relativ zum Saatgut und den Luftdruck der Reifen des Ackerschleppers 10 und andere Maschineneinstellungen.

## Patentansprüche

1. Verfahren zur Optimierung eines Arbeitsparameters einer zur Ausbringung von landwirtschaftlichem Material auf ein Feld (80) eingerichteten Maschine (12), mit dem Schritt des Berechnens eines Arbeitsparameters für die Maschine (12) bei der Ausbringung des Materials an einer Stelle des Feldes durch eine elektronische Rechnereinheit (60) anhand von Daten hinsichtlich einer das Pflanzenwachstum beeinflussenden Eigenschaft der mit dem Material zu beaufschlagenden Stelle,
wobei das Berechnen des Arbeitsparameters für die Maschine (12) bei der Ausbringung des Materials an der mit dem Material zu beaufschlagenden Stelle durch die elektronische Rechnereinheit (60) zusätzlich anhand von Daten hinsichtlich der das Pflanzenwachstum beeinflussenden Eigenschaft einer der mit dem Material zu beaufschlagenden Stelle benachbarten Stelle des Feldes (80) im Sinne einer Optimierung eines pflanzenbaulichen Ergebnisses erfolgt,
**dadurch gekennzeichnet, dass** die Rechnereinheit (60) anhand der Daten der benachbarten Stelle und eines Pflanzenwachstumsmodells ein erwartetes Pflanzenwachstum an der benachbarten Stelle berechnet und den Arbeitsparameter für die mit dem Material zu beaufschlagende Stelle anhand des an der benachbarten Stelle erwarteten Pflanzenwachstums berechnet.

2. Verfahren nach Anspruch 1, wobei die Daten hinsichtlich der das Pflanzenwachstum beeinflussenden Eigenschaft der der mit dem Material zu beaufschlagenden Stelle benachbarten Stelle des Feldes (80) Daten hinsichtlich eines Arbeitsparameters der Maschine (12) für die der mit dem Material zu beaufschlagenden Stelle benachbarte Stelle des Feldes (80) sind oder umfassen, wobei der Arbeitsparameter für die der mit dem Material zu beaufschlagenden Stelle benachbarte Stelle des Feldes (80) aus der das Pflanzenwachstum beeinflussenden Eigenschaft der der mit dem Material zu beaufschlagenden Stelle benachbarten Stelle des Feldes (80) abgeleitet wird.

3. Verfahren nach einem der Ansprüche 1 oder 2, wobei die Rechnereinheit (60) den Arbeitsparameter im Sinne eines möglichst gleichmäßigen Aufgangs und/oder Wachstums der Pflanzen berechnet.

4. Verfahren nach einem der Ansprüche 1 bis 3, wobei die Berechnung des Arbeitsparameters im Vorab bei der Planung eines Ausbringvorgangs für ein gesamtes Feld anhand von für das Feld vorliegenden Daten hinsichtlich der das Pflanzenwachstum beeinflussenden Eigenschaften erfolgt.

5. Verfahren nach einem der Ansprüche 1 bis 3, wobei die Berechnung des Arbeitsparameters während des Ausbringvorgangs auf einem Feld erfolgt, die Daten hinsichtlich der das Pflanzenwachstum beeinflussenden Eigenschaften mittels eines Sensors (66) während des Ausbringvorgangs ermittelt werden und die Daten für die benachbarte Stelle bei einer vorherigen Überfahrt des Feldes (80) ermittelt wurden.

6. Verfahren nach Anspruch 5, wobei während einer ersten Überfahrt über das Feld entlang eines ersten Weges der Arbeitsparameter der Maschine (12) durch die Rechnereinheit (60) nur anhand mittels des Sensors (66) ermittelter, das Pflanzenwachstum beeinflussenden Eigenschaften ermittelt wird und die Rechnereinheit (60) die auf der ersten Überfahrt ermittelten das Pflanzenwachstum beeinflussenden Eigenschaften und/oder Arbeitsparameter bei einer zweiten Überfahrt an der ersten Überfahrt benachbarten Stellen des Feldes berücksichtigt.

7. Verfahren nach einem der vorhergehenden Ansprüche, mit dem Schritt des selbsttätigen Einstellens des Arbeitsparameters an der Maschine (12).

8. Verfahren nach einem der vorhergehenden Ansprüche, wobei die Maschine (12) eine Sämaschine und der Arbeitsparameter die Sätiefe ist.

9. Verfahren nach einem der Ansprüche 1 bis 8, wobei die Maschine (12) mehrere über ihre Breite verteilte, separat durch einen Aktor (58) ansteuerbare Einrichtungen (14) umfasst, die durch die Rechnereinrichtung (60) getrennt voneinander und ggf. unterschiedlich angesteuert werden.

10. Maschine (12) zur Ausbringung von landwirtschaftlichem Material auf ein Feld (80), mit einer Rechnereinrichtung (60), die programmiert ist, einen Arbeitsparameter für die Maschine (12) bei der Ausbringung des Materials an einer Stelle des Feldes (80) anhand von Daten hinsichtlich von das Pflanzenwachstum beeinflussenden Eigenschaften der mit dem Material zu beaufschlagenden Stelle zu berechnen,
wobei die Rechnereinrichtung (60) programmiert ist, den Arbeitsparameter für die Maschine (12) bei der Ausbringung des Materials an der mit dem Material zu beaufschlagenden Stelle durch die elektronische Rechnereinheit (60) zusätzlich anhand von Daten hinsichtlich der das Pflanzenwachstum beeinflussenden Eigenschaft einer der mit dem Material zu beaufschlagenden Stelle benachbarten Stelle des Feldes (80) im Sinne einer Optimierung eines pflanzenbaulichen Ergebnisses zu berechnen,
**dadurch gekennzeichnet, dass** die Rechnereinheit (60) programmiert ist, anhand der Daten der benachbarten Stelle und eines Pflanzenwachstumsmodells ein erwartetes Pflanzenwachstum an der benachbarten Stelle zu berechnen und den Arbeitsparameter für die mit dem Material zu beaufschlagende Stelle anhand des an der benachbarten Stelle erwarteten Pflanzenwachstums zu berechnen.

## Claims

1. Method for optimizing an operating parameter of a machine (12) designed for the application of agricultural material to a field (80), involving the step of calculating an operating parameter for the machine (12) during the application of the material at a location of the field by an electronic computer unit (60) on the basis of data concerning a plant-growth affecting property of the location to be supplied with the material,
wherein the calculation of the operating parameter for the machine (12) during the application of the material at the location to be supplied with the material is performed by the electronic computer unit (60) additionally on the basis of data concerning the plant-growth affecting property of a location of the field (80) adjacent to the location to be supplied with the material for the purpose of optimizing a horticultural result,
**characterized in that** the computer unit (60) calculates an expected plant growth at the adjacent location on the basis of the data of the adjacent location and a plant-growth model and calculates the operating parameter for the location to be supplied with the material on the basis of the plant growth expected at the adjacent location.

2. Method according to Claim 1, wherein the data concerning the plant-growth affecting property of the location of the field (80) adjacent to the location to be supplied with material are or comprise data concerning an operating parameter of the machine (12) for the location of the field (80) adjacent to the location to be supplied with the material, wherein the operating parameter for the location of the field (80) adjacent to the location to be supplied with the material is derived from the plant-growth affecting property of the location of the field (80) adjacent to the location to be supplied with the material.

3. Method according to either of Claims 1 and 2, wherein the computer unit (60) calculates the operating parameter for the purpose of the most uniform possible emergence and/or growth of the plants.

4. Method according to one of Claims 1 to 3, wherein the calculation of the operating parameter is performed in advance during the planning of an application process for an entire field on the basis of data available for the field concerning the plant-growth affecting properties.

5. Method according to one of Claims 1 to 3, wherein the calculation of the operating parameter is performed during the application process on a field, the data concerning the plant-growth affecting properties are determined by means of a sensor (66) during the application process and the data for the adjacent location were determined during a previous crossing of the field (80).

6. Method according to Claim 5, wherein, during a first crossing of the field along a first path, the operating parameter of the machine (12) is determined by the computer unit (60) only on the basis of plant-growth affecting properties determined by means of the sensor (66) and the computer unit (60) takes into account the plant-growth affecting properties and/or operating parameters determined in the first crossing during a second crossing at locations of the field adjacent to the first crossing.

7. Method according to one of the preceding claims, involving the step of automatically setting the operating parameter on the machine (12).

8. Method according to one of the preceding claims, wherein the machine (12) is a seed drill and the operating parameter is the sowing depth.

9. Method according to one of Claims 1 to 8, wherein the machine (12) comprises multiple devices (14), which are distributed over its width, can be activated separately by an actuator (58) and are activated by the computer device (60) separately and possibly differently from one another.

10. Machine (12) for the application of agricultural material to a field (80), comprising a computer device (60), which is programmed to calculate an operating parameter for the machine (12) during the application of the material at a location of the field (80) on the basis of data concerning plant-growth affecting properties of the location to be supplied with the material,
wherein the computer device (60) is programmed to calculate the operating parameter for the machine (12) during the application of the material at the location to be supplied with the material by the electronic computer unit (60) additionally on the basis of data concerning the plant-growth affecting property of a location of the field (80) adjacent to the location to be supplied with the material for the purpose of optimizing a horticultural result,
**characterized in that** the computer unit (60) is programmed to calculate an expected plant growth at the adjacent location on the basis of the data of the adjacent location and a plant-growth model and to calculate the operating parameter for the location to be supplied with the material on the basis of the plant growth expected at the adjacent location.

## Revendications

1. Procédé permettant d'optimiser un paramètre de travail d'une machine (12) aménagée pour épandre une matière agricole sur un champ (80), comprenant l'étape consistant à calculer un paramètre de travail pour la machine (12), lors de l'épandage de la matière à un endroit du champ, par une unité de calcul électronique (60) à l'aide de données concernant une propriété influençant la croissance des plantes de l'endroit censé recevoir la matière,
le calcul du paramètre de travail pour la machine (12), lors de l'épandage de la matière à l'endroit censé recevoir la matière, par l'unité de calcul électronique (60) étant effectué en plus à l'aide de données concernant la propriété influençant la croissance des plantes d'un endroit du champ (80), adjacent à l'endroit censé recevoir la matière, dans le sens d'une optimisation d'un résultat de culture de plantes,
**caractérisé en ce que** l'unité de calcul (60) calcule à l'aide des données de l'endroit adjacent et d'un modèle de croissance des plantes une croissance des plantes attendue à l'endroit adjacent, et calcule le paramètre de travail pour l'endroit censé recevoir la matière à l'aide de la croissance des plantes attendue à l'endroit adjacent.

2. Procédé selon la revendication 1, dans lequel les données concernant la propriété influençant la croissance des plantes de l'endroit du champ (80), adjacent à l'endroit censé recevoir la matière, sont ou comprennent des données concernant un paramètre de travail de la machine (12) pour l'endroit du champ (80), adjacent à l'endroit censé recevoir la matière, le paramètre de travail pour l'endroit du champ (80), adjacent à l'endroit censé recevoir la matière, étant déduit de la propriété influençant la croissance des plantes de l'endroit du champ (80), adjacent à l'endroit censé recevoir la matière.

3. Procédé selon l'une quelconque des revendications 1 ou 2, dans lequel l'unité de calcul (60) calcule le paramètre de travail dans le sens d'une éclosion et/ou d'une croissance des plantes aussi homogène(s) que possible.

4. Procédé selon l'une quelconque des revendications 1 à 3, dans lequel le calcul du paramètre de travail est effectué à l'avance lors de la planification d'un processus d'épandage pour un champ entier à l'aide de données disponibles pour le champ concernant la propriété influençant la croissance des plantes.

5. Procédé selon l'une quelconque des revendications 1 à 3, dans lequel le calcul du paramètre de travail est effectué pendant le processus d'épandage sur un champ, les données concernant les propriétés influençant la croissance des plantes sont déterminées au moyen d'un capteur (66) pendant le processus d'épandage, et les données ont été déterminées pour l'endroit adjacent lors d'un passage précédent par le champ (80).

6. Procédé selon la revendication 5, dans lequel pendant un premier passage par le champ le long d'un premier chemin, le paramètre de travail de la machine (12) est déterminé par l'unité de calcul (60) uniquement à l'aide de propriétés influençant la croissance des plantes, déterminées au moyen du capteur (66), et l'unité de calcul (60) tient compte des propriétés influençant la croissance des plantes, déterminées lors du premier passage, et/ou de paramètres de travail lors d'un deuxième passage à des endroits du champ, adjacents au premier passage.

7. Procédé selon l'une quelconque des revendications précédentes, comprenant l'étape consistant à régler automatiquement le paramètre de travail sur la machine (12) .

8. Procédé selon l'une quelconque des revendications précédentes, dans lequel la machine (12) est un semoir et le paramètre de travail est la profondeur d'ensemencement.

9. Procédé selon l'une quelconque des revendications 1 à 8, dans lequel la machine (12) comprend plusieurs dispositifs (14) répartis sur sa largeur, pouvant être pilotés séparément par un actionneur (58) et qui sont pilotés par le dispositif de calcul (60) séparément les uns des autres et le cas échéant différemment.

10. Machine (12) permettant d'épandre une matière agricole sur un champ (80), comprenant un dispositif de calcul (60) qui est programmé pour calculer un paramètre de travail pour la machine (12) lors de l'épandage de la matière à un endroit du champ (80) à l'aide de données concernant des propriétés influençant la croissance des plantes de l'endroit censé recevoir la matière,
le dispositif de calcul (60) étant programmé pour calculer le paramètre de travail pour la machine (12), lors de l'épandage de la matière à l'endroit censé recevoir la matière, par l'unité de calcul électronique (60) en plus à l'aide de données concernant la propriété influençant la croissance des plantes d'un endroit du champ (80), adjacent à l'endroit censé recevoir la matière, dans le sens d'une optimisation d'un résultat de culture des plantes,
**caractérisée en ce que** l'unité de calcul (60) est programmée pour calculer à l'aide des données de l'endroit adjacent et d'un modèle de croissance des plantes une croissance des plantes attendue à l'endroit adjacent, et pour calculer le paramètre de travail pour l'endroit censé recevoir la matière à l'aide de la croissance des plantes attendue à l'endroit adjacent.
